# EUROPEAN PATENT SPECIFICATION

(11) **EP 3 133 028 B1**
(45) Date of publication and mention of the grant of the patent: **28.11.2018**
(21) Application number: 14889745.7
(22) Date of filing: 15.04.2014
(51) Int. Cl.: D21J 3/00, B65D 43/02

(54) **MANUFACTURING METHOD FOR OUTER COVERING EDGE OF MOLDED CUP LID**
HERSTELLUNGSVERFAHREN FÜR ÄUSSEREN ABDECKUNGSRAND EINES GEFORMTEN BECHERDECKELS
PROCÉDÉ DE FABRICATION D'UN BORD DE RECOUVREMENT EXTÉRIEUR DE COUVERCLE DE GOBELET MOULÉ

(43) Date of publication of application: 22.02.2017
(73) Proprietor: Dandong Mingcheng Environmental Protection Products Co., Ltd, Liaoning 118301 (CN)
(72) Inventor: LAI, Zongshen, Yilan Country, Taiwan province (CN); CHEN, Jianfeng, Shaoguan City, Guangdong Province PC 511100 (CN)
(74) Representative: Cabinet Chaillot
(86) International application number: PCT/CN2014/000413
(87) International publication number: WO 2015/157877

(56) References cited:
- CN-A- 101 961 921
- CN-U- 203 583 290
- CN-Y- 201 240 029
- JP-A- H08 156 955
- TW-A- 201 103 828
- US-A1- 2011 193 264

## Description

### BACKGROUND OF THE INVENTION

### Field of the Invention

The present invention relates to a manufacturing method for an outer covering edge of a molded cup lid and a product, and more particularly to the product made of plant fibers, and the manufacturing method that adopts two techniques, respectively: "pulp-shaping" and "heat-pressure shaping" to produce a semi-finished product of the molded cup lid, and then forms a protruding-out outer covering edge around the periphery of the semi-finished product, and finally produces the molded cup lid product.

### Description of the Related Art

In general, a conventional disposable cup lid is made of a plastic material such as PP, PS, and PVC and manufactured by plastic injection molding, and such cup lid is commonly known as "plastic cup lid". As to recycling and disposal, the conventional plastic cup lid causes a serious pollution issue, particularly when the quantity is large, the recycling process is difficult, and the plastic cup lid leads to a serious damage to environment, and the disposable cup lid made of plastic totally departs from the concept of environmental protection. Since the conventional plastic cup lid is manufactured by plastic injection molding, the moving space required for demolding is limited, so that the plastic cup lid product fails to meet the requirement of covering the mouth of the paper cup closely. After the lid is combined with the mouth of the paper cup, the lid may be loosened or separated from the mouth of the paper cup to cause a leakage of the beverage contained in the paper cup and raise a safety concern.

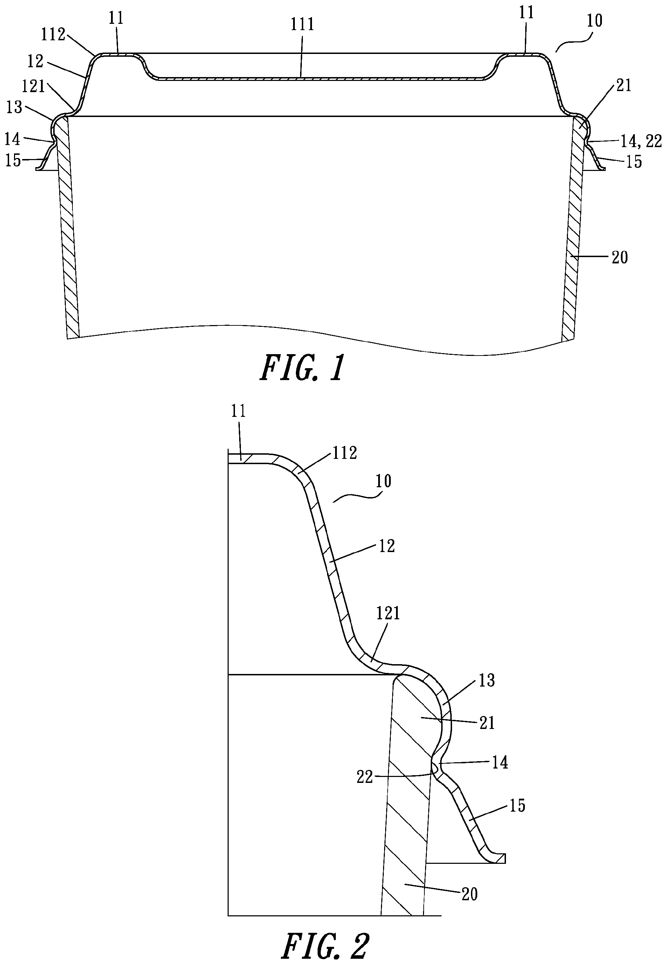

At present, mixtures such as pulp and plant fiber are used as materials to make cup lids, and the cup lids are manufactured by molds trough the pulp-shaping and heat-pressure shaping technologies, and such cup lid is called "molded cup lid" paper cup lid" which has a significantly different terminology with respect to the plastic cup lid. Therefore, the terms "molded cup lid' and "paper cup lid" mentioned in the present invention refer to the objects with the same properties. To meet the requirements of covering the molded cup lid product onto the mouth of the paper cup and preventing leakage of the beverage, the ideal relative covering relation between the molded cup lid 10 and the paper cup body 20 is shown in Figs. 1 and 2. The molded cup lid 10 has a top ring portion 11, whose internal periphery may be designed with a height drop to enhance the strength of the cover portion 111, and the outer side of the top ring portion 11 is descended gradually from an outer arc edge 112 and slightly expanded outward to form a peripheral portion 12, and then extended outward when reaching an inner arc edge 121, and further covered downwardly and inwardly to form an outer covering edge 13 with the lowest point extended inwardly to form an inverted-hook groove 14, and then outwardly deviated to form a lift wall 15. The paper cup body 20 has a covered ring 21 with an expanded external diameter formed at the mouth of the cup, and a concave annular ring groove 22 formed at a joint of the bottom of the covered ring 21 and the paper cup body 20. During use, the molded cup lid 10 is covered onto the mouth of the paper cup body 20. At first, the molded cup lid 10 cannot be covered onto the mouth of the paper cup body 20 completely, and thus it is necessary to apply a force to cover the outer covering 13 at a side of the molded cup lid 10 onto the covered ring 21 at the corresponsive position of the paper cup body 20 as much as possible, and then further apply a force to slightly rotate the remaining outer covering edge 13 outward to force it to pass the remaining covered ring 21, so that the outer covering edge 13 totally encloses the covered ring 21 tightly, and the inverted-hook groove 14 of the molded cup lid 10 is pressed precisely into the concave annular ring groove 22 at the bottom of the covered ring 21 to enhance the covering stability between the outer covering edge 13 and the covered ring 21.

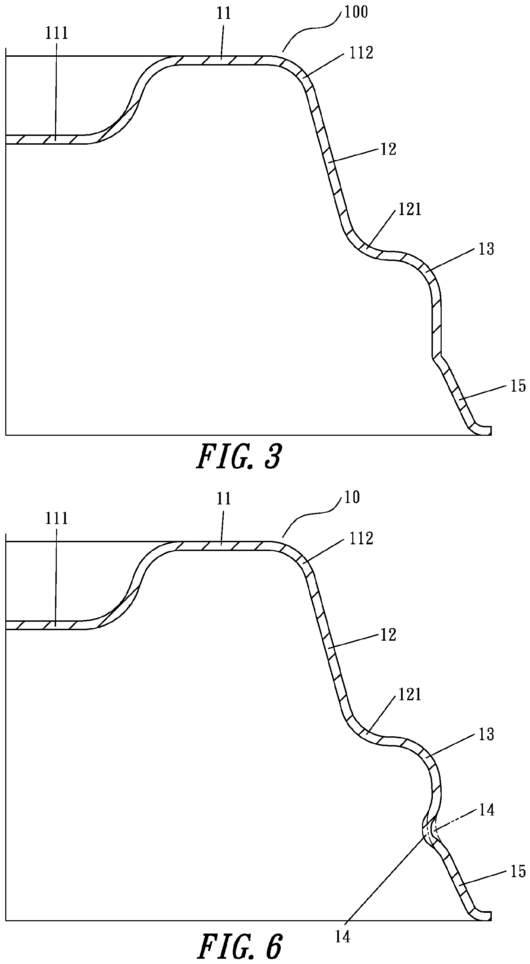

In Figs. 1 and 2, the molded cup lid 10 has the double structure of the outer covering edge 13 and the inverted-hook groove 14, which is an important factor for covering the molded cup lid 10 onto the paper cup body 20 tightly. In actual manufacture, the inverted-hook groove 14 of the molded cup lid 10 cannot be formed directly, and it is necessary to form a semi-finished product 100 of the molded cup lid as shown in Fig. 3 first. In other words, the semi-finished product 100 is a general molded product processed by the "pulp-shaping" and "heat-pressure shaping" processes. Now, the semi-finished product 100 has the top ring portion 11, the cover portion 111, the outer arc edge 112, the peripheral portion 12, the inner arc edge 121 and the lift wall 15, and a partially formed outer covering edge 13, but without the existence of the inverted-hook groove 14. The reason resides on that the limitation of the moving space required for demolding the semi-finished product 100 after the "heat-pressure shaping" process takes place, so that the lower section of the outer covering edge 13 cannot be formed inwardly in a negative angle. Therefore, it is necessary to perform the shaping in the vertically up and down status first. As a result, the semi-finished product 100 as shown in Fig. 3 is formed first, and then the semi-finished product 100 is processed with a compression and deformation process before the lower section of the outer covering edge 13 can be shaped inwardly with a negative angle, so as to form the structure of the inverted-hook groove 14.

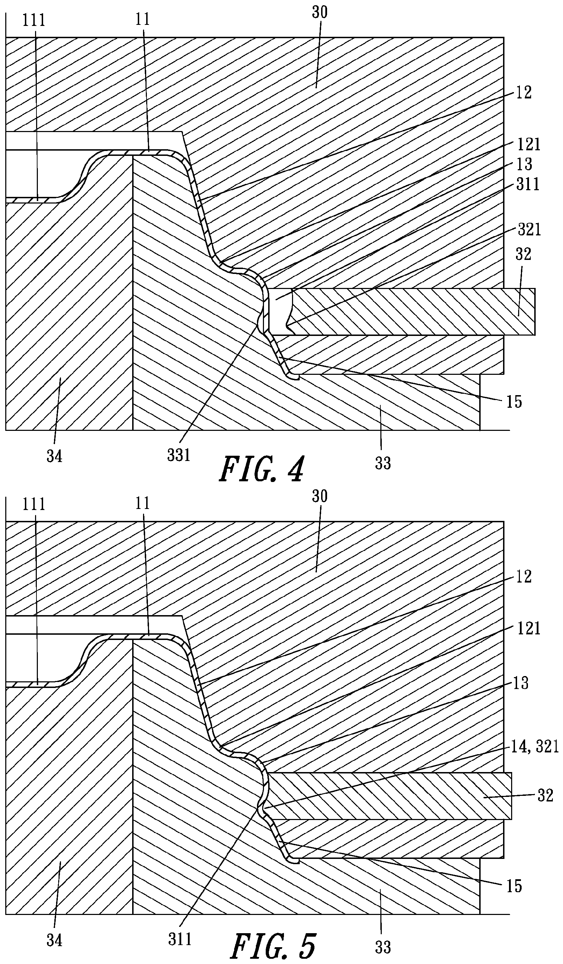

With reference to Figs. 4 and 5 for the compression and deformation process of a conventional semi-finished product 100, an outer mold 30 is covered onto the semi-finished product 100, wherein the outer mold 30 is configured to be corresponsive to a side profile of the semi-finished product 100, and a transverse annular side groove 311 is formed at a position of the outer mold 30 where the inverted-hook groove 14 is formed on the semi-finished product 100 for receiving a group of shaping slide blocks 32, and the internal periphery of the shaping slide blocks 32 has a protruding-out shaping ridge 321, such that when the shaping ridges 321 are moved forward and inward together, all of the shaping ridges 321 can be conjoined into an annular body. An inner mold 33 is received into the semi-finished product 100, and a material-propping block 34 is contained in the middle of the inner mold 33 and the material-propping block 34 has a profile corresponsive to the semi-finished product 100. However, the inner mold 33 has a recessed receiving groove 331 formed at a position of the semi-finished product 100 where the inverted-hook groove 14 is formed, and the location and profile of the recessed receiving groove 331 correspondingly match with those of the shaping ridge 321. When the molds of the outer mold 30 and the inner mold 33 together with the material-propping block 34 are closed as shown in Fig. 4 and the shaping slide blocks 32 are pushed to move inward, the shaping ridges 321 abut the outer surface of the semi-finished product 100, and move forward continuously to let the shaping ridge 321 resist the surface of the semi-finished product 100 and be deformed and contracted into the receiving groove 331 of the inner mold 33. Therefore, an annular inverted-hook groove 14 is formed on the semi-finished product 100 as shown in Fig. 5, the lower section of the outer covering edge 13 produces a negative angle inwardly, so as to form a product of the molded cup lid 10. Then, the shaping slide blocks 32 are withdrawn outward, and the outer mold 30 and the inner mold 33 are opened in a direction opposite to the closing direction, and the material-propping block 34 props the molded cup lid 10 out to complete the whole process.

Although the manufacturing process as shown in Figs. 4 and 5 completes the manufacture of the molded cup lid 10, yet the molded cup lid 10 so manufactured still has the following drawbacks. Since the semi-finished product 100 is formed by using the "pulp-shaping" and "heat-pressure shaping" processes, the shape and profile are fixed, and the inverted-hook groove 14 formed on the stably shaped semi-finished product 100 is manufactured by compression, and the inverted-hook groove 14 is situated at an unstably formed position of the molded cup lid 10, so that a slight natural withdrawal (in the direction opposite to the compression) is formed at the inverted-hook groove 14 and the lower portion of the outer covering edge 13 due to the effect of the plastic material while the cup sits still as shown in Fig. 6. Since the withdrawal is very small, the appearance does not show, but when the molded cup lid 10 is used to cover onto the mouth of the paper cup body 20, the following effects of forces will be confronted:
1. It is necessary to apply a force for the operation, so that the molded cup lid 10 is rotated and expanded slightly outward, and the compulsory restoration goes beyond the covered ring 21 of the paper cup body 20. Since the direction of applying the force is opposite to the deformation direction of the inverted-hook groove 14, therefore the inverted-hook groove 14 will be withdrawn in a direction opposite to the direction of compression.
2. Since the paper cup body 20 is generally used for containing hot beverage, heat is transmitted upwardly and outwardly, so that the inverted-hook groove 14 will also be withdrawn in a direction opposite to the direction of compression.
3. The inverted-hook groove 14 and the lower section of the outer covering edge 13 of the molded cup lid 10 are withdrawn naturally, so that the beverage contained in the paper cup body 20 may be leaked easily after the molded cup lid 10 is covered onto the mouth of the paper cup due to the joint effect of the withdrawals by force and heat, or the molded cup lid 10 may be loosened or separated from the paper cup body 20. Such conventional design fails to meet the requirement of covering the molded cup lid 10 onto the paper cup body 20 tightly or to prevent hot beverage from leaking out from the paper cup.

US 2011/193264 A1 discloses a manufacturing method for an outer covering edge of a molded cup lid from a semi-finished product of the molded cup lid made of a plant fiber material being manufactured by a pulp-shaping process and a heat-pressure shaping process, the method comprising the steps of:
covering an outer mold onto the semi-finished product, and the outer mold having a side profile matching the semi-finished product, and the outer mold having a plurality of side blocks disposed at a position of the semi-finished product where the outer covering edge is formed and the side blocks being pushed forward to form an annular body, and a receiving groove being formed on an inner edge of the side block and with a profile corresponsive to the outer covering edge for moving the side blocks forward, so as to make the receiving groove to reach an outer surface of the semi-finished product at a position where the outer covering edge is formed;
installing an inner mold into the semi-finished product, and the inner mold having a profile matching the profile of the semi-finished product, withdrawing the slide block outward, and opening the outer mold and the inner mold to produce the molded cup lid.

### SUMMARY OF THE INVENTION

In view of the aforementioned drawbacks of the prior art, the inventor of the present invention based on years of experience in the related industry to conduct extensive researches and experiments, and finally invented the manufacturing method for an outer covering edge of a molded cup lid in accordance with the present invention to overcome the drawbacks of the prior art.

Therefore, it is a primary objective of the present invention to provide a manufacturing method for producing a semi-finished product of a molded cup lid made of a plant fiber and processed by the "pulp-shaping" and "heat-pressure shaping" processes, wherein a protruding-out outer covering edge is formed around the periphery of the molded cup lid.

Another objective of the present invention is to provide molded cup lid product made of a plant fiber and processed by the "pulp-shaping" and "thermal compression shaping" processes, wherein a protruding-out outer covering edge is formed around the periphery of the molded cup lid.

To achieve the aforementioned and other objectives, the present invention provides a manufacturing method for an outer covering edge of a molded cup lid, wherein a semi-finished
product of the molded cup lid is made of a plant fiber material and manufactured by a "pulp-shaping" process and a "heat-pressure shaping" process, and the method comprises the following steps:
(1) Cover an outer mold onto the semi-finished product, wherein the outer mold has a side profile matching the semi-finished product, and the outer mold includes a plurality of slide blocks disposed at a position of the semi-finished product where the outer covering edge is formed and the slide blocks are pushed forward to form an annular body, and a receiving groove is formed on an inner edge of the slide block and has a profile corresponsive to the outer covering edge for moving the slide blocks forward, so as to make the receiving groove to reach an outer surface of the semi-finished product at a position where the outer covering edge is formed.
(2) Install an inner mold into the semi-finished product, wherein the inner mold has a profile matching the profile of the semi-finished product, and a transversally movable shaping mold is installed in the middle of the inner mold, and the shaping mold has a front end formed into a shaping ridge corresponsive to profile of the pre-formed outer covering edge and an external power is installed at a rear end of the shaping mold for driving the shaping mold to move forward or backward, such that the external power may push the shaping mold to move forward to an inner surface of the semi-finished product at a position where the outer covering edge is pre-formed.
(3) Push the shaping mold to move continuously forward by the external power, so that the surface of the semi-finished product is compressed by the shaping ridge and deformed to form the profile of the outer covering edge that enters and remains in the receiving groove.
(4) Produce a relative rotation between the inner mold and the shaping mold jointly with the outer mold, the slide block and the semi-finished product, and the shaping ridge of the shaping mold is compressed at the inner surface of the semi-finished product to form an outer covering edge that enters and remains in the receiving groove.
(5) Withdraw the shaping mold to its original position by the external power, while withdrawing the slide block outward, and open the outer mold and the inner mold to produce the molded cup lid.

In the manufacturing method for an outer covering edge of a molded cup lid, the semi-finished product of the molded cup lid has a top ring portion with an outer side descended from an outer arc edge and expanded outwardly into a peripheral portion, and extended outwardly after reaching an inner arc edge, and an inverted-hook groove is formed at a position vertically below a starting-point position of a not-yet formed outer covering edge, and deviated outwardly and formed into a lift wall.

In the manufacturing method for an outer covering edge of a molded cup lid, when the slide block is moving forward, and the receiving groove reaches the outer surface of the semi-finished product at a position where the outer covering edge is pre-formed, the top of the receiving groove abuts the starting-point position of the not-yet formed outer covering edge, and the bottom of the receiving groove abuts the inverted-hook groove.

The present invention also provides a molded cup lid product manufactured by the aforementioned method, wherein a semi-finished product of the molded cup lid made of a plant fiber material is manufactured by a pulp-shaping process and a heat-pressure shaping process, and the method of manufacturing the semi-finished product of the molded cup lid comprises the steps of:
(1) Cover an outer mold onto the semi-finished product, wherein the outer mold has a side profile matching the semi-finished product, and the outer mold includes a plurality of slide blocks disposed at a position of the semi-finished product where the outer covering edge is formed and the slide blocks are pushed forward to form an annular body, and a receiving groove is formed on an inner edge of the slide block and has a profile corresponsive to the outer covering edge for moving the slide blocks forward, so as to make the receiving groove to reach an outer surface of the semi-finished product at a position where the outer covering edge is formed.
(2) Install an inner mold into the semi-finished product, wherein the inner mold has a profile matching the profile of the semi-finished product, and a transversally movable shaping mold is installed in the middle of the inner mold, and the shaping mold has a front end formed into a shaping ridge corresponsive to profile of the pre-formed outer covering edge and an external power is installed at a rear end of the shaping mold for driving the shaping mold to move forward or backward, such that the external power may push the shaping mold to move forward to an inner surface of the semi-finished product at a position where the outer covering edge is pre-formed.
(3) Push the shaping mold to move continuously forward by the external power, so that the surface of the semi-finished product is compressed by the shaping ridge and deformed to form the profile of the outer covering edge that enters and remains in the receiving groove.
(4) Produce a relative rotation between the inner mold and the shaping mold jointly with the outer mold, the slide block and the semi-finished product, and the shaping ridge of the shaping mold is compressed at the inner surface of the semi-finished product to form an outer covering edge that enters and remains in the receiving groove.
(5) Withdraw the shaping mold to its original position by the external power, while withdrawing the slide block outward, and open the outer mold and the inner mold to produce the molded cup lid.

In the molded cup lid product, the semi-finished product of the molded cup lid has a top ring portion with an outer side descended from an outer arc edge and expanded outwardly into a peripheral portion, and extended outwardly after reaching an inner arc edge, and an inverted-hook groove is formed at a position vertically below a starting-point position of a not-yet formed outer covering edge, and deviated outwardly and formed into a lift wall.

In the molded cup lid product, when the slide block is moving forward, and the receiving groove reaches the outer surface of the semi-finished product at a position where the outer covering edge is pre-formed, the top of the receiving groove abuts the starting-point position of the not-yet formed outer covering edge, and the bottom of the receiving groove abuts the inverted-hook groove.

### BRIEF DESCRIPTION OF THE DRAWINGS

Fig. 1 is a schematic view of a conventional molded cup lid covered onto the rim of a paper cup;
Fig. 2 is a partial blowup view of Fig. 1;
Fig. 3 is a partial sectional view of a semi-finished product of a conventional molded cup lid;
Fig. 4 is a schematic view of closing a mold of a semi-finished product of a conventional before an inverted-hook groove is manufactured and formed;
Fig. 5 is a schematic view of closing a mold of a semi-finished product of a conventional after an inverted-hook groove is manufactured and formed;
Fig. 6 is a schematic view of an inverted-hook groove of a conventional molded cup lid being contracted;
Fig. 7 is a partial sectional view of a semi-finished product of a preferred embodiment of the present invention;
Fig. 8 is a schematic view of closing a mold of a preferred embodiment of the present invention before an outer covering edge is manufactured and formed;
Fig. 9 is a schematic view of closing a mold of a preferred embodiment of the present invention after an outer covering edge is manufactured and formed;
Fig. 10 is a cross-sectional view of preferred embodiment of the present invention; and
Fig. 11 is a schematic view of an outer covering edge of a preferred embodiment of the present invention being contracted.

### REFERENCE NUMBERALS IN DRAWING FIGURES

- 10: Molded cup lid
- 11: Top ring portion
- 111: Cover portion
- 112: Outer arc edge
- 12: Peripheral portion
- 121: Inner arc edge
- 13: Outer covering edge
- 14: Inverted-hook groove
- 15: Lift wall
- 100: Semi-finished product
- 20: Paper cup body
- 21: Covered ring
- 22: Concave annular ring groove
- 30: Outer mold
- 311: Transverse annular side groove
- 32: Shaping slide blocks
- 321: Shaping ridge
- 33: Inner mold
- 331: Receiving groove
- 34: Material-propping block
- 40: Molded cup lid
- 41: Top ring portion
- 411: Cover portion
- 412: Outer arc edge
- 42: Peripheral portion
- 421: Inner arc edge
- 43: Outer covering edge
- 44: Inverted-hook groove
- 45: Lift wall
- 400: Semi-finished product
- 50: Outer mold
- 511: Transversal annular slide groove
- 52: Slide blocks
- 521: Receiving grooves
- 53: Inner mold
- 54: Shaping mold
- 541: Shaping ridge
- 542: External power

### DETAILED DESCRIPTION OF THE PREFERRED EMBODIMENTS

The technical characteristics, contents, advantages and effects of the present invention will be apparent with the detailed description of a preferred embodiment accompanied with related drawings as follows.

The present invention discloses a manufacturing method for an outer covering edge of a molded cup lid and a product, wherein a semi-finished product of the molded cup lid is made of a plant fiber material and manufactured by a "pulp-shaping" process and a "heat-pressure shaping" process, and then a protruding-out outer covering edge is formed around the periphery of the semi-finished product. The invention also provides a molded cup lid product manufactured by the aforementioned method. Since both pulp-shaping and heat-pressure shaping processes of the plant fiber materials are prior art, they will not be described here.

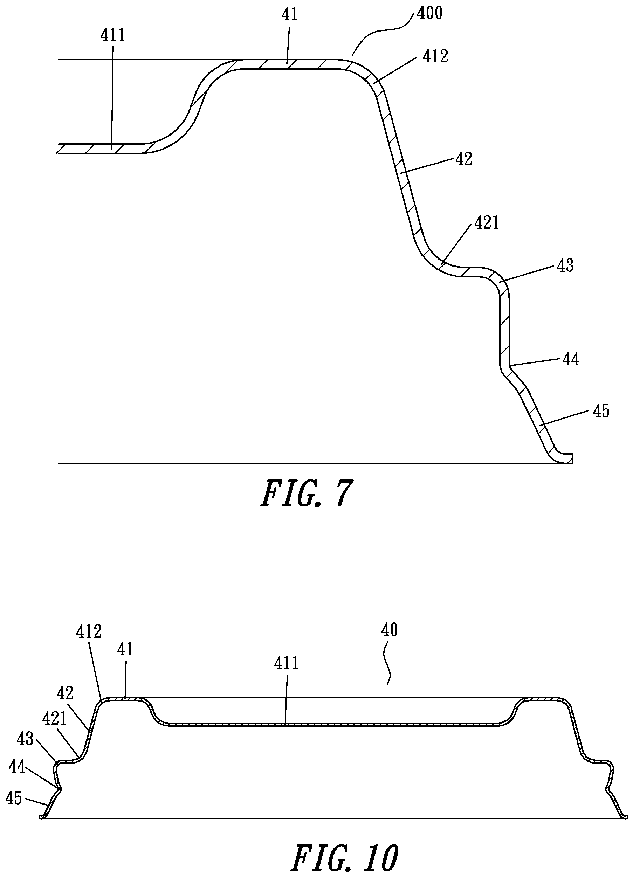

The present invention focuses on the process of manufacturing a semi-finished product of the molded cup lid, so that an embodiment of the present invention has the existence of a semi-finished product 400, and then a complete molded cup lid 40 is manufactured. In Fig. 7, the semi-finished product 400 is made of a plant fiber material and manufactured by a pulp-shaping process and a heat-pressure shaping process. Compared with the semi-finished product 400 as shown in Fig. 3, the structure of the semi-finished product 400 of this embodiment has the same part and different parts, and the same part resides on that both semi-finished products 400 have the complete top ring portion 41, cover portion 411, outer arc edge 412, peripheral portion 42, inner arc edge 421 and lift wall 45, and the different parts reside on that an inverted-hook groove 44 is vertically cut and formed from the semi-finished product 400 and at a position where the inner arc edge 421 reaches a not-yet formed outer covering edge 43. In other words, the semi-finished product 400 has the inverted-hook groove 44 now, but the outer covering edge 43 yet.

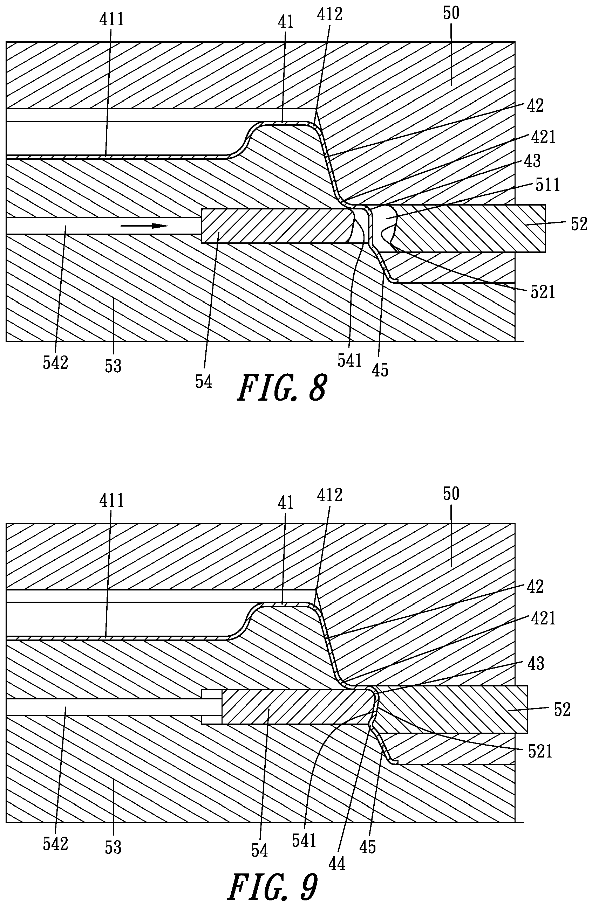

Then, the semi-finished product 400 is processed by a compression and deformation process once, and then a complete molded cup lid 40 is manufactured. With reference to Figs. 8 and 9, an outer mold 50 is covered onto the semi-finished product 400, and the outer mold 50 must match the side profile of the semi-finished product 400, and the outer mold 30 has a transversal annular slide groove 511 formed on the semi-finished product 400 and at a position where the outer covering edge 43 is pre-formed for receiving the plurality of slide blocks 52, and the internal periphery of the slide blocks 52 has a recessed receiving groove 521 (with a profile matching the pre-formed outer covering edge 43). When the slide blocks 52 are moved inwardly forward together, the receiving grooves 521 are combined into an annular body. An inner mold 53 is installed into the semi-finished product 400 with a transversally movable shaping mold 54 installed therein, and the inner mold 53 matches the profile of the semi-finished product 400, and the front end of the shaping mold 54 is formed into a shaping ridge 541 which is corresponsive to the profile of the pre-formed outer covering edge 43, and an external power 542 such as a power cylinder is installed at the rear end of the shaping mold 54 and provided for driving the shaping mold 54 to move forward or backward. The outer mold 50 and the inner mold 53 are closed as shown in Fig. 8.

The external power pushes the slide blocks 52 to move inward, such that when the receiving groove 521 reaches and stays at the outer side of the semi-finished product 100, and the top end of the receiving groove 521 abuts a starting-point position of the not-yet formed outer covering edge 43, and the bottom end of the receiving groove 521 abuts the inverted-hook groove 44. Then, the external power 542 is turned on to push the shaping mold 54 to move forward and abut the surface of the semi-finished product 400 at the position where the outer covering edge 43 is formed, and the shaping mold 54 is continuously moved forward, such that the surface of the semi-finished product 400 is compressed by the shaping ridge 541 and deformed to form the profile of an outer covering edge 43 that enters and stays in the receiving groove 521. Now, an external power is provided for producing a relative rotation between the inner mold 53 and the shaping mold 54 jointly with the outer mold 50, the slide block 52 and the semi-finished product 400. In other words, the inner mold 53 and the shaping mold 54 are rotated together, but the outer mold 50, the slide block 52 and the semi-finished product 400 remain still, or the outer mold 50, the slide block 52 and the semi-finished product 400 are rotated together, but the inner mold 53 and the shaping mold 54 remain still, so that the shaping ridge 541 of the shaping mold 54 is compressed at the inner surface of the semi-finished product 400 to form an outer covering edge 43 that enters and remains into the receiving groove 521 as shown in Fig. 9. Finally, the external power 542 is turned on to drive the shaping mold 54 to withdraw to its original position, while driving the slide blocks 52 to withdraw outward, and the outer mold 50 and the inner mold 53 are opened in a direction opposite to the direction of closing molds as shown in Fig. 10 to produce the molded cup lid 40.

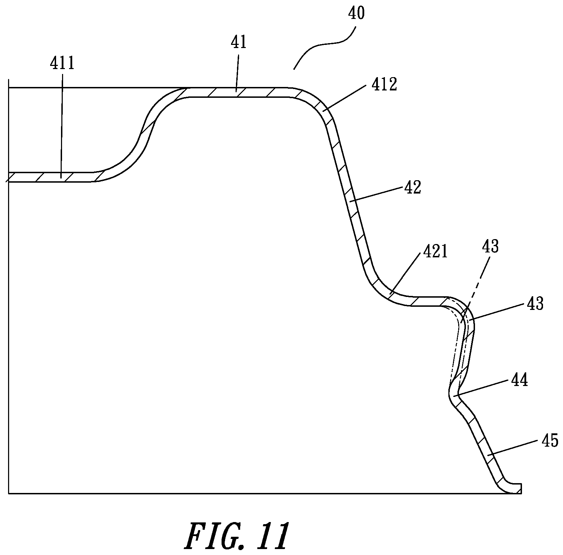

In the use of the molded cup lid 40 of the present invention, the molded cup lid 40 has the effects of being covered onto the mouth of the paper cup tightly and preventing the hot beverage contained in the paper cup. The present invention has the aforementioned effects since the outer covering edge 43 is formed from the inside to the outside by compression, so that after the paper cup sits still, the outer covering edge 43 is slightly contracted inward (towards a direction opposite to the compression direction) naturally due to the properties of the plastic material, so that the outer covering edge 43 is reduced as shown in Fig. 11. Since the contraction is very small, the appearance does not show. In addition to the natural contraction of the outer covering edge 43, the inverted-hook groove 44 in the molded cup lid 40 of the present invention is a structure existed when the semi-finished product 400 is manufactured by both pulp-shaping and heat-pressure shaping processes, so that the structure and position of the semi-finished product 400 have been shaped stably.

When the molded cup lid 40 is used to cover the mouth of the paper cup body 20, the outer covering edge 43 is rotated outwardly to pass across the covered ring 21 of paper cup body 20 compulsory while applying forces, and the hot liquid contained in the paper cup body 20 to push the outer covering edge 43 to expand outward, the amount of the natural contraction at the outer covering edge 43 offsets the applied force the drive by heat, together with the stable structure and position of the inverted-hook groove 44, so that after the molded cup lid 40 is covered onto the mouth of the paper cup body 20, the effect of covering the outer covering edge 43 of the molded cup lid 40 onto the covered ring 21 of the paper cup body 20 tightly to prevent the beverage from being leaked or the mold cup lid 40 from being loosened or separated can be achieved. Therefore, the present invention can meet the requirement of covering the molded cup lid 40 to the mouth of the paper cup body 20 tightly.

In summation of the description above, the present invention provides a manufacturing method for an outer covering edge of a molded cup lid and a product manufactured by the aforementioned method, in which a semi-finished product of a the molded cup lid is made of plant fiber and manufacture by both "pulp-shaping" and "heat-pressure shaping" processes, and a protruding-out outer covering edge is formed around the periphery of the semi-finished product.

The method and product of the present invention are novel, and the invention has the effect of preventing leakage and separation since the outer covering edge of molded cup lid product can wrap around the covered ring of the paper cup body closely, so as to improve the drawbacks of the prior art.

In summation of the description above, the present invention complies with the patent application requirements, and thus is duly filed for patent application. While the invention has been described by means of specific embodiments, numerous modifications and variations could be made thereto by those skilled in the art without departing from the scope and spirit of the invention set forth in the claims.

## Claims

1. A manufacturing method for an outer covering edge (43) of a molded cup lid (40), with a semi-finished product (400) of the molded cup lid (40) made of a plant fiber material being manufactured by a pulp-shaping process and a heat-pressure shaping process, and the method comprising the steps of:
(1) covering an outer mold (50) onto the semi-finished product (400), and the outer mold (50) having a side profile matching the semi-finished product (400), and the outer mold (50) having a plurality of slide blocks (52) disposed at a position of the semi-finished product (400) where the outer covering edge (43) is formed and the slide blocks (52) being pushed forward to form an annular body, and a receiving groove (521) being formed on an inner edge of the slide block (52) and with a profile corresponsive to the outer covering edge (43) for moving the slide blocks (52) forward, so as to make the receiving groove (521) to reach an outer surface of the semi-finished product (400) at a position where the outer covering edge (43) is formed;
(2) installing an inner mold (53) into the semi-finished product (400), and the inner mold (53) having a profile matching the profile of the semi-finished product (400), and a transversally movable shaping mold (54) being installed in the middle of the inner mold (53), and the shaping mold (54) having a front end formed into a shaping ridge (541) corresponsive to profile of the pre-formed outer covering edge (43) and an external power (542) being installed at a rear end of the shaping mold (54) for driving the shaping mold (54) to move forward or backward, such that the external power (542) may push the shaping mold (54) to move forward to an inner surface of the semi-finished product (400) at a position where the outer covering edge (43) is pre-formed;
(3) pushing the shaping mold (54) to move continuously forward by the external power (542), so that the surface of the semi-finished product (400) is compressed by the shaping ridge (541) and deformed to form the profile of the outer covering edge (43) that enters and remains in the receiving groove (521);
(4) producing a relative rotation between the inner mold (53) with the shaping mold (54) jointly and the outer mold (50), the slide block (52) and the semi-finished product (400), and the shaping ridge (541) of the shaping mold (54) being compressed at the inner surface of the semi-finished product (400) and deformed to form an outer covering edge (43) that enters and remains in the receiving groove (521); and
(5) withdrawing the shaping mold (54) to its original position by the external power (542), while withdrawing the slide block (52) outward, and opening the outer mold (50) and the inner mold (53) to produce the molded cup lid (40).

2. The manufacturing method for an outer covering edge (43) of a molded cup lid (40) as claimed in claim 1, wherein the semi-finished product (400) of the molded cup lid (40) has a top ring portion (41) with an outer side descended from an outer arc edge (412) and outwardly expanded to form a peripheral portion (42), and extended outward after reaching an inner arc edge (421), and an inverted-hook groove (44) is formed at a position vertically below a starting-point position of a not-yet formed outer covering edge (43), and outwardly deviated to form a lift wall (45).

3. The manufacturing method for an outer covering edge (43) of a molded cup lid (40) as claimed in claim 2, wherein when the slide block (52) is moving forward, and the receiving groove (521) reaches the outer surface of the semi-finished product (400) at a position where the outer covering edge (43) is pre-formed, the top of the receiving groove (521) abuts the starting-point position of the not-yet formed outer covering edge (43), and the bottom of the receiving groove (521) abuts the inverted-hook groove (44).

## Patentansprüche

1. Herstellungsverfahren für einen äußeren Abdeckungsrand (43) eines geformten Becherdeckels (40), wobei ein halbgefertigtes Produkt (400) des geformten Becherdeckels (40) aus einem Pflanzenfasermaterial hergestellt wird, in einem Breiformverfahren und einem Erhitzung-Druck-Formverfahren, und wobei das Verfahren folgende Phasen umfasst:
(1) Decken einer Außenform (50) auf das halbgefertigte Produkt (400), und die Außenform (50) hat ein Seitenprofil, das mit dem halbgefertigten Produkt (400) zusammenpasst, und die Außenform (50) hat eine Vielzahl von Gleitblöcken (52),die in einer Position des halbgefertigten Produkts (400) angeordnet sind, in der der äußere Abdeckungsrand (43) geformt wird und die Gleitblöcke (52) vorwärts geschoben werden, um einen ringförmigen Körper zu bilden, und eine Aufnahmenut (521) ist auf einer inneren Kante des Gleitblocks (52) ausgebildet und hat ein Profil, das dem äußeren Abdeckungsrand (43) entspricht, um die Gleitblöcke (52) vorwärts zu bewegen, damit die Aufnahmenut (521) eine Außenfläche des halbgefertigten Produkts (400) in einer Position erreicht, in der der äußere Abdeckungsrand (43) geformt wird;
(2) Installieren einer Innenform (53) in dem halbgefertigten Produkt (400), und die Innenform (53) hat ein Profil, das mit dem Profil des halbgefertigten Produkts (400) zusammenpasst, und eine quer bewegliche gestaltgebende Form (54) ist in der Mitte der Innenform (53) installiert, und die gestaltgebende Form (54) hat ein Vorderende, das zu einer Formrippe (541) geformt ist, die dem Profil des vorgeformten äußeren Abdeckungsrands (43) entspricht, und eine externe Stromversorgung (542) ist an einem rückwärtigen Ende der gestaltgebenden Form (54) zum Antrieb der gestaltgebenden Form (54) installiert, um sie vorwärts oder rückwärts zu bewegen, so dass die externe Stromversorgung (542) die gestaltgebende Form (54) schieben kann, damit sie sich vorwärts zu einer Innenfläche des halbgefertigten Produkts (400) in einer Position bewegt, in der der äußere Abdeckungsrand (43) vorgeformt wird;
(3) Schieben der gestaltgebende Form (54) durch die externe Stromversorgung (542), damit sie sich fortlaufend vorwärts bewegt, so dass die Oberfläche des halbgefertigten Produkts (400) durch die Formrippe (541) komprimiert und verformt wird, um das Profil des äußeren Abdeckungsrands (43) zu formen, der in die Aufnahmenut (521) eintritt und dort verbleibt;
(4) Herstellung einer relativen Rotation zwischen der Innenform (53) gemeinsam mit der gestaltgebenden Form (54) und der Außenform (50), dem Gleitblock (52) und dem halbgefertigten Produkt (400), und die Formrippe (541) der gestaltgebenden Form (54) wird an der Innenfläche des halbgefertigten Produkts (400) komprimiert und verformt, um einen äußeren Abdeckungsrand (43) zu bilden, der in die Aufnahmenut (521) eintritt und dort verbleibt; und
(5) Entnahme der gestaltgebenden Form (54) durch die externe Stromversorgung (542) zu ihrer ursprünglichen Position hin, währenddessen Entnahme des Gleitblocks (52) nach außen, und Öffnung der Außenform (50) und der Innenform (53), um den geformten Becherdeckel (40) herzustellen.

2. Herstellungsverfahren für einen äußeren Abdeckungsrand (43) eines geformten Becherdeckels (40) nach Anspruch 1, wobei das halbgefertigte Produkt (400) des geformten Becherdeckels (40) ein oberes Ringteil (41) mit einer Außenseite umfasst, die von einer äußeren Bogenkante (412) absteigt und sich nach außen ausdehnt, um ein Randteil (42) zu bilden, und nach Erreichen einer inneren Bogenkante (421) sich nach außen erstreckt, und eine Nut mit umgekehrtem Haken (44) ist in einer Position senkrecht unter einer Ausgangsposition eines noch nicht geformten äußeren Abdeckungsrands (43) ausgebildet und nach außen umgelenkt, um eine Hubwand (45) zu bilden.

3. Herstellungsverfahren für einen äußeren Abdeckungsrand (43) eines geformten Becherdeckels (40) nach Anspruch 2, wobei, wenn der Gleitblock (52) sich vorwärts bewegt und die Aufnahmenut (521) die Außenfläche des halbgefertigten Produkts (400) in einer Position erreicht, in der der äußere Abdeckungsrand (43) vorgeformt wird, die Spitze der Aufnahmenut (521) schlägt an die Ausgangsposition des noch nicht geformten äußeren Abdeckungsrands (43) an, und der Boden der Aufnahmenut (521) schlägt an die Nut mit umgekehrtem Haken (44) an.

## Revendications

1. Procédé de fabrication pour un bord de recouvrement extérieur (43) d'un couvercle de gobelet moulé (40), avec un produit semi-fini (400) du couvercle de gobelet moulé (40) fait d'une matière de fibre végétale fabriquée par un processus de mise en forme de pâte et un processus de mise en forme par chaleur/pression, et le procédé comprenant les étapes :
(1) recouvrir d'un moule extérieur (50) le produit semi-fini (400), et le moule extérieur (50) ayant un profil latéral correspondant au produit semi-fini (400), et le moule extérieur (50) ayant une pluralité de blocs coulissants (52) disposés au niveau d'une position du produit semi-fini (400) où le bord de recouvrement extérieur (43) est formé et les blocs coulissants (52) étant poussés vers l'avant pour former un corps annulaire, et une rainure de réception (521) étant formée sur un bord intérieur du bloc coulissant (52) et avec un profil correspondant au bord de recouvrement extérieur (43) pour déplacer les blocs coulissants (52) vers l'avant, de façon à amener la rainure de réception (521) à atteindre une surface extérieure du produit semi-fini (400) à une position où le bord de recouvrement extérieur (43) est formé ;
(2) installer un moule intérieur (53) dans le produit semi-fini (400), et le moule intérieur (53) ayant un profil correspondant au profil du produit semi-fini (400), et un moule de mise en forme mobile transversalement (54) étant installé au milieu du moule intérieur (53), et le moule de mise en forme (54) ayant une extrémité avant formée en une arête de mise en forme (541) correspondant au profil du bord de recouvrement extérieur préformé (43), et une énergie externe (542) étant installée à une extrémité arrière du moule de mise en forme (54) pour entraîner le moule de mise en forme (54) en mouvement vers l'avant ou vers l'arrière, de telle sorte que l'énergie externe (542) peut pousser le moule de mise en forme (54) pour qu'il se déplace vers l'avant vers une surface intérieure du produit semi-fini (400) à une position où le bord de recouvrement extérieur (43) est préformé ;
(3) pousser le moule de mise en forme (54) pour qu'il se déplace de manière continue vers l'avant par l'énergie externe (542), de telle sorte que la surface du produit semi-fini (400) est comprimée par l'arête de mise en forme (541) et déformée pour former le profil du bord de recouvrement extérieur (43) qui entre et reste dans la rainure de réception (521) ;
(4) produire une rotation relative entre le moule intérieur (53), conjointement avec le moule de mise en forme (54), et le moule extérieur (50), le bloc coulissant (52) et le produit semi-fini (400), et l'arête de mise en forme (541) du moule de mise en forme (54) étant comprimée au niveau de la surface intérieure du produit semi-fini (400) et déformée pour former un bord de recouvrement extérieur (43) qui entre et reste dans la rainure de réception (521) ; et
(5) retirer le moule de mise en forme (54) jusqu'à sa position d'origine par l'énergie externe (542), tout en retirant le bloc coulissant (52) vers l'extérieur, et ouvrir le moule extérieur (50) et le moule intérieur (53) pour produire le couvercle de gobelet moulé (40).

2. Procédé de fabrication pour un bord de recouvrement extérieur (43) d'un couvercle de gobelet moulé (40) selon la revendication 1, dans lequel le produit semi-fini (400) du couvercle de gobelet moulé (40) a une partie annulaire supérieure (41) avec un côté extérieur descendant à partir d'un bord en arc extérieur (412) et s'étendant vers l'extérieur pour former une partie périphérique (42), et s'étendant vers l'extérieur après avoir atteint un bord en arc intérieur (421), et une rainure en crochet inversé (44) est formée à une position verticalement au-dessous d'une position de point de départ d'un bord de recouvrement extérieur non encore formé (43), et s'éloignant vers l'extérieur pour former une paroi de levage (45).

3. Procédé de fabrication pour un bord de recouvrement extérieur (43) d'un couvercle de gobelet moulé (40) selon la revendication 2, dans lequel, lorsque le bloc coulissant (52) se déplace vers l'avant, et que la rainure de réception (521) atteint la surface extérieure du produit semi-fini (400) à une position où le bord de recouvrement extérieur (43) est préformé, la partie supérieure de la rainure de réception (521) est contiguë à la position de point de départ du bord de recouvrement extérieur non encore formé (43), et la partie inférieure de la rainure de réception (521) est contiguë à la rainure en crochet inversé (44).
